(19) Europäisches Patentamt
European Patent Office
Office européen des brevets

(11) **EP 4 400 548 A1**

(12) **EUROPEAN PATENT APPLICATION**
published in accordance with Art. 153(4) EPC

(43) Date of publication:
**17.07.2024 Bulletin 2024/29**

(21) Application number: **22867014.7**

(22) Date of filing: **15.06.2022**

(51) International Patent Classification (IPC):
*C08L 77/06* (2006.01)   *C08G 69/26* (2006.01)
*C08K 3/08* (2006.01)   *H01F 1/053* (2006.01)
*H01F 1/113* (2006.01)

(52) Cooperative Patent Classification (CPC):
**C08G 69/26; C08K 3/08; C08L 77/06; H01F 1/053;
H01F 1/113**

(86) International application number:
**PCT/JP2022/023902**

(87) International publication number:
**WO 2023/037684 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2021 JP 2021145522**

(71) Applicant: **MITSUBISHI GAS CHEMICAL
COMPANY, INC.**
**Chiyoda-ku
Tokyo 100-8324 (JP)**

(72) Inventors:
- **YAMANAKA, Masaki**
  **Hiratsuka-shi, Kanagawa 254-0016 (JP)**
- **SHIMADA NAKAMURA, Jin**
  **Hiratsuka-shi, Kanagawa 254-0016 (JP)**
- **ODA, Takafumi**
  **Hiratsuka-shi, Kanagawa 254-0016 (JP)**

(74) Representative: **Vossius & Partner
Patentanwälte Rechtsanwälte mbB
Siebertstrasse 3
81675 München (DE)**

(54) **RESIN COMPOSITION AND MOLDED ARTICLE**

(57)   Provided are a resin composition capable of providing a molded article excellent in magnetization, and a molded article formed from the resin composition. The resin composition for a bonded magnet contains from 10 to 90 parts by mass of a polyamide resin and from 90 to 10 parts by mass of a magnetic material. The polyamide resin contains a xylylenediamine-based polyamide resin. The xylylenediamine-based polyamide resin contains diamine-derived structural units and dicarboxylic acid-derived structural units. 70 mol% or more of the diamine-derived structural units are derived from a xylylenediamine. 70 mol% or more of the dicarboxylic acid-derived structural units are derived from an $\alpha,\omega$-linear aliphatic dicarboxylic acid having from 4 to 12 carbon atoms.

EP 4 400 548 A1

**Description**

Technical Field

The present invention relates to a resin composition and a molded article.

Background Art

A bonded magnet (sometimes referred to also as a resin-bonded magnet or a plastic magnet) can be produced into a magnet having a more complicated shape by injection molding as compared with a known sintered magnet, and has high productivity. Therefore, the bonded magnet is widely used in various electronic components including a small motor. Such a bonded magnet uses a polyamide resin having crystallinity and excellent fluidity, such as polyamide 6 or polyamide 12.

For example, Patent Document 1 discloses a composition for a synthetic resin magnet obtained by dispersing and mixing a magnetic powder in a resin binder. This composition is characterized in that the resin binder contains a main resin made of a thermoplastic resin, and a polymerized fatty acid-based polyamide elastomer. This patent document describes a specific example in which polyamide 6 is used as the main resin.

Citation List

Patent Documents

Patent Document 1: JP 2001-123067 A

Summary of Invention

Technical Problem

However, as a result of studies, the present inventors have found that a molded article obtained from a resin composition for a bonded magnet using polyamide 6 has insufficient magnetization.

Therefore, an object of the present invention is to solve such an issue and provide a resin composition capable of providing a molded article excellent in magnetization, and a molded article formed from the resin composition.

Solution to Problem

As a result of studies conducted in response to the issue described above, the present inventors have found that the above issue can be solved by using a xylylenediamine-based polyamide resin as a binder resin. Specifically, the issue described above is solved by the following solutions.

<1> A resin composition for a bonded magnet, the resin composition containing:

from 10 to 90 parts by mass of a polyamide resin; and
from 90 to 10 parts by mass of a magnetic material,
in which
the polyamide resin contains a xylylenediamine-based polyamide resin,
the xylylenediamine-based polyamide resin contains diamine-derived structural units and dicarboxylic acid-derived structural units,
70 mol% or more of the diamine-derived structural units are derived from a xylylenediamine, and
70 mol% or more of the dicarboxylic acid-derived structural units are derived from an $\alpha,\omega$-linear aliphatic dicarboxylic acid having from 4 to 12 carbon atoms.

<2> The resin composition according to <1>, in which the xylylenediamine contains from 10 to 90 mol% of metaxylylenediamine and from 90 to 10 mol% of paraxylylenediamine.

<3> The resin composition according to <1> or <2>, in which the $\alpha,\omega$-linear aliphatic dicarboxylic acid having from 4 to 12 carbon atoms contains dodecanedioic acid.

<4> The resin composition according to <1>, in which the xylylenediamine contains from 10 to 90 mol% of metaxylylenediamine and from 90 to 10 mol% of paraxylylenediamine, and the $\alpha,\omega$-linear aliphatic dicarboxylic acid having from 4 to 12 carbon atoms contains dodecanedioic acid.

<5> The resin composition according to <1>, in which 70 mol% or more of the diamine-derived structural units are derived from metaxylylenediamine, and 70 mol% or more of the dicarboxylic acid-derived structural units are derived from adipic acid.

<6> The resin composition according to any one of <1> to <5>, in which the xylylenediamine-based polyamide resin has a melt viscosity of from 10 to 600 Pa·s as measured at an apparent shear rate of 121.6 sec$^{-1}$ and a measurement temperature of 260°C.

<7> The resin composition according to any one of <1> to <6>, in which the magnetic material includes a ferrite magnet and/or a rare earth magnet.

<8> The resin composition according to any one of <1> to <7>, in which the xylylenediamine-based polyamide resin has a melt viscosity of from 10 to 600 Pa·s as measured at 121.6 sec$^{-1}$ and a measurement temperature of 260°C, and the magnetic material includes a ferrite magnet and/or a rare earth magnet.

<9> A molded article formed from the resin composition described in any one of <1> to <8>.

Advantageous Effects of Invention

The present invention has made it possible to provide a resin composition capable of providing a molded article excellent in magnetization, and a molded article formed from the resin composition.

Description of Embodiments

Hereinafter, an embodiment for conducting the present invention (referred to simply as "the present embodiment" below) will be described in detail. Note that the present embodiment below is an example for describing the present invention, and the present invention is not limited to the present embodiment.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

When a measurement method or the like of a standard set forth in the present specification differs depending on the year, it is based on the standard as of January 1, 2021 unless otherwise stated.

A resin composition for a bonded magnet according to the present embodiment (sometimes simply referred to as "resin composition") is characterized in that the resin composition contains from 10 to 90 parts by mass of a polyamide resin and from 90 to 10 parts by mass of a magnetic material, and the polyamide resin contains a xylylenediamine-based polyamide resin, the xylylenediamine-based polyamide resin contains diamine-derived structural units and dicarboxylic acid-derived structural units, 70 mol% or more of the diamine-derived structural units are derived from a xylylenediamine, and that 70 mol% or more of the dicarboxylic acid-derived structural units are derived from an $\alpha,\omega$-linear aliphatic dicarboxylic acid having from 4 to 12 carbon atoms. By virtue of such a configuration, a resin composition having high magnetization can be obtained. The reason for this is presumed to be that the xylylenediamine-based polyamide resin has a xylylenediamine skeleton which is excellent in adhesion to metals.

In addition, even when a magnetic material is blended in the xylylenediamine-based polyamide resin, excellent performance inherent in the xylylenediamine-based polyamide resin can be maintained. In particular, high magnetization can be exhibited without excellent chemical resistance and low water absorption which are inherent in the xylylenediamine-based polyamide resin being inhibited.

Polyamide Resin

The resin composition of the present embodiment contains a polyamide resin. The polyamide resin contains a xylylenediamine-based polyamide resin, the xylylenediamine-based polyamide resin contains diamine-derived structural units and dicarboxylic acid-derived structural units, 70 mol% or more of the diamine-derived structural units are derived from xylylenediamine, and 70 mol% or more of the dicarboxylic acid-derived structural units are derived from an $\alpha,\omega$-linear aliphatic dicarboxylic acid having from 4 to 12 carbon atoms.

In the xylylenediamine-based polyamide resin, preferably 75 mol% or more, more preferably 80 mol% or more, still more preferably 85 mol% or more, even more preferably 90 mol% or more, even still more preferably 95 mol% or more, and yet even still more preferably 98 mol% or more of the diamine-derived structural units are derived from an xylylenediamine. In addition, 100 mol% of the diamine-derived structural units of the xylylenediamine-based polyamide resin may be derived from a xylylenediamine.

The xylylenediamine preferably contains at least one of metaxylylenediamine or paraxylylenediamine. The xylylenediamine preferably contains from 10 to 90 mol% of metaxylylenediamine and from 90 to 10 mol% of paraxylylenediamine (provided, however, that a total of the metaxylylenediamine and the paraxylylenediamine does not exceed 100 mol%; the same applies hereinafter), more preferably contains from 20 to 80 mol% of metaxylylenediamine and from 80 to 20 mol% of paraxylylenediamine, and still more preferably contains from 60 to 80 mol% of metaxylylenediamine and from 40 to 20 mol% of paraxylylenediamine.

In the resin composition of the present embodiment, it is desirable to lower a mold temperature when the resin composition is molded, in order to suppress a decrease in orientation magnetic field. As one of means for lowering the mold temperature, a polyamide resin having a high crystallization rate can be used. In the present embodiment, both metaxylylenediamine and paraxylylenediamine are preferably used as the xylylenediamine because the crystallization rate can be increased.

Preferably 75 mol% or more, more preferably 80 mol% or more, still more preferably 85 mol% or more, even more preferably 90 mol% or more, even still more preferably 95 mol% or more, and yet even still more preferably 98 mol% or more of the dicarboxylic acid-derived structural units of the xylylenediamine-based polyamide resin are derived from an $\alpha,\omega$-linear aliphatic dicarboxylic acid having from 4 to 12 carbon atoms. In addition, 100 mol% of the dicarboxylic acid-derived structural units of the xylylenediamine-based polyamide resin may be derived from an $\alpha,\omega$-linear aliphatic dicarboxylic acid having from 4 to 12 carbon atoms.

Examples of the $\alpha,\omega$-linear aliphatic dicarboxylic acid having from 4 to 12 carbon atoms that can be suitably used, include adipic acid, sebacic acid, suberic acid, dodecanedioic acid, or the like; adipic acid, sebacic acid, and dodecanedioic acid are more preferable; and dodecanedioic acid is still more preferable. When dodecanedioic acid is used, the melt viscosity of the xylylenediamine-based polyamide resin can be lowered, the magnetic material can be more effectively dispersed in the polyamide resin, and the magnetization of the obtained molded article can be further increased.

Examples of diamines besides xylylenediamine that can be used as raw material diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having aromatic ring(s), such as bis(4-aminophenyl)ether, p-phenylenediamine, and bis(aminomethyl)naphthalene. One type thereof can be used, or two or more types thereof can be mixed and used.

Examples of the dicarboxylic acid component other than the $\alpha,\omega$-linear aliphatic dicarboxylic acid having from 4 to 12 carbon atoms can include phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

The xylylenediamine-based polyamide resin used in the present embodiment is mainly composed of diamine-derived structural units and dicarboxylic acid-derived structural units, but structural units other than these are not entirely excluded. Of course, the xylylenediamine-based polyamide resin may contain a structural unit derived from a lactam such as $\epsilon$-caprolactam or laurolactam, or from an aliphatic aminocarboxylic acid such as aminocaproic acid or aminoundecanoic acid. Here, the term "main component" indicates that, of the structural units constituting the xylylenediamine-based polyamide resin, the total number of the diamine-derived structural units and the dicarboxylic acid-derived structural units is the largest among all the structural units. In the present embodiment, a total of the diamine-derived structural units and the dicarboxylic acid-derived structural units in the xylylenediamine-based polyamide resin preferably accounts for 90 mass% or more, and more preferably 95 mass% or more of all the structural units, and still more preferably 99.9 mass% or more of all the structural units excluding terminal groups.

A first example of the xylylenediamine-based polyamide resin in the present embodiment is a xylylenediamine-based polyamide resin containing from 10 to 90 mol% of metaxylylenediamine and from 90 to 10 mol% of paraxylylenediamine (preferably, the total of metaxylylenediamine and paraxylylenediamine is 95 mol% or more), in which the $\alpha,\omega$-linear aliphatic dicarboxylic acid having from 4 to 12 carbon atoms contains dodecanedioic acid (preferably, 95 mol% or more of the dicarboxylic acid-derived structural unit is dodecanedioic acid). The use of metaxylylenediamine and paraxylylenediamine as the xylylenediamine can increase the crystallization rate and lower the mold temperature during molding. Therefore, a resin composition having higher magnetization tends to be obtained. In addition, the use of dodecanedioic acid as the dicarboxylic acid can lower the melt viscosity of the polyamide resin, and more effectively disperse the magnetic material in the polyamide resin.

A second example of the xylylenediamine-based polyamide resin in the present embodiment is a xylylenediamine-based polyamide resin in which 70 mol% or more (preferably 95 mol% or more) of the diamine-derived structural units are derived from metaxylylenediamine, and 70 mol% or more (preferably more than 95 mol%) of the dicarboxylic acid-derived structural units are derived from adipic acid.

In the present embodiment, the xylylenediamine-based polyamide resin of the first example is particularly preferably used.

In the present embodiment, the xylylenediamine-based polyamide resin has a melt viscosity, as measured at an apparent shear rate of 121.6 sec$^{-1}$ and a measurement temperature of 260°C, of preferably 600 Pa·s or lower, more preferably 450 Pa·s or lower, still more preferably 300 Pa-s or lower, even more preferably 250 Pa-s or lower, even still more preferably 150 Pa·s or lower, and yet even still more preferably 149 Pa-s or lower. With the melt viscosity being not higher than the upper limit, the magnetic material can be more effectively dispersed in the polyamide resin. The lower limit of the melt viscosity of the xylylenediamine-based polyamide resin is preferably 10 Pa·s or higher, more preferably 30 Pa·s or higher, still more preferably 40 Pa·s or higher, and even more preferably 45 Pa·s or higher. With the melt viscosity being not lower than the lower limit, the occurrence of burrs during various types of molding such as injection molding is suppressed, and impact resistance of the molded article tends to improve.

When the polyamide resin in the resin composition of the present embodiment contains two or more xylylenediamine-based polyamide resins and/or contains both a xylylenediamine-based polyamide resin and an additional polyamide resin, the melt viscosity of the polyamide resin in a mixture preferably satisfies the above range.

The melt viscosity is measured in accordance with descriptions in the Examples below.

The resin composition of the present embodiment may contain, as the polyamide resin, the xylylenediamine-based polyamide resin alone, or may contain one, or two or more additional polyamide resins other than the xylylenediamine-based polyamide resin.

When the resin composition contains an additional polyamide resin, a known polyamide resin can be used. The resin composition preferably contains a semi-aromatic polyamide resin and/or an aliphatic polyamide resin, and more preferably contains an aliphatic polyamide resin.

The semi-aromatic polyamide resin refers to a polyamide resin composed of diamine-derived structural units and dicarboxylic acid-derived structural units, wherein from 20 to 80 mol% of the total structural units of the diamine-derived structural units and the dicarboxylic acid-derived structural units are structural units containing an aromatic ring. The use of such a semi-aromatic polyamide resin can increase mechanical strength of the obtained molded article.

Examples of the semi-aromatic polyamide resin include terephthalic acid-based polyamide resins (polyamide 6T, polyamide 9T, polyamide 10T, and polyamide 6T/6I).

The aliphatic polyamide resin refers to a polymer having a structural unit linked by an amide bond such as an acid amide obtained by ring-opening polymerization of lactam, polycondensation of aminocarboxylic acid, or polycondensation of diamine and dibasic acid, in which more than 80 mol% (preferably 90 mol% or more) of a raw material monomer is a non-aromatic compound.

Examples of the aliphatic polyamide resin include polyamide 6, polyamide 11, polyamide 12, polyamide 46, polyamide 66, polyamide 610, polyamide 612, polyamide 6/66, and polyamide 1010. Polyamide 6/66, polyamide 66, and polyamide 6 are preferable, and polyamide 66 and polyamide 6 are more preferable.

In the resin composition of the present embodiment, a proportion of the xylylenediamine-based polyamide resin in the polyamide resin is preferably 85 mass% or more, more preferably 90 mass% or more, still more preferably 95 mass% or more, and even more preferably 97 mass% or more, and may be 99 mass% or more. Furthermore, the upper limit is 100 mass%. By virtue of such a configuration, a resin composition excellent in various performances can be obtained.

Magnetic Material

The resin composition of the present embodiment contains a magnetic material. The resin composition, when containing a magnetic material, can function as a resin composition for a bonded magnet.

As the magnetic material, a known magnetic material used in a bonded magnet can be used. The magnetic material is usually a powder.

Examples of the magnetic material preferably used in the present embodiment include a ferrite magnet and/or a rare earth magnet. Examples of the ferrite magnet include a strontium ferrite magnet and a barium ferrite magnet, and a strontium ferrite magnet is preferable. Examples of the rare earth magnet include an Sm/Co magnet, an Sm/FeN magnet, an Nd/Fe/B magnet (neodymium magnet), and a Ce/Co magnet, and a neodymium magnet is preferable.

The magnetic material used in the present embodiment usually has a number average particle size of from 0.05 to 300 μm, and particularly preferably from about 0.1 to 100 um, from the perspective of melt fluidity of the resin composition, orientation and filling rate of the magnetic powder, and the like.

The magnetic material (preferably magnetic powder) can be blended with the polyamide resin after being subjected to a known pretreatment, if necessary. In this case, a coupling treatment is preferably performed using a known coupling agent such as a silane coupling agent or a titanate-based coupling agent although not particularly limited, and the use of a magnetic material subjected to such a coupling treatment can more effectively improve the melt fluidity at the time of high filling. As the coupling agent, the silane coupling agent described in paragraph [0020] of JP 2001-123067 A and the titanate-based coupling agent described in paragraph [0021] of the same document can be used, the contents of which are thereof are incorporated in the present specification.

In addition to the above, as the magnetic material, the magnetic powder described in paragraphs [0041] to [0047] of JP 2005-072564 A can also be used, the contents of which are incorporated in the present specification.

Blending Ratio of Polyamide Resin and Magnetic Material

The resin composition of the present embodiment contains from 90 to 10 parts by mass of the magnetic material with respect to from 10 to 90 parts by mass of the polyamide resin. In the resin composition of the present embodiment, a proportion of the polyamide resin is preferably 20 parts by mass or more, more preferably 30 parts by mass or more, still more preferably 40 parts by mass or more, even more preferably 45 parts by mass or more, and even still more preferably 50 parts by mass or more, per 100 parts by mass of the total of the polyamide resin and the magnetic material. With the proportion being not lower than the lower limit, the fluidity increases, and the kneadability and moldability tends to improve. Also, in the resin composition of the present embodiment, the proportion of the polyamide resin is preferably 80 parts by mass or less, more preferably 70 parts by mass or less, still more preferably 65 parts by mass or less, even more preferably 60 parts by mass or less, and even still more preferably 55 parts by mass or less, per 100 parts by mass of the total of the polyamide resin and the magnetic material. With the proportion being not higher than the upper limit, magnetic properties of the bonded magnet tend to further improve.

The resin composition of the present embodiment may contain only one of the polyamide resin (xylylenediamine-based polyamide resin, an additional polyamide resin) and the magnetic material respectively, or contain two or more thereof. When two or more types are contained, the total amount thereof is preferably in the above range.

A total amount of the polyamide resin and the magnetic material in the resin composition of the present embodiment is preferably 85 mass% or more, more preferably 90 mass% or more, still more preferably 95 mass% or more, and even more preferably 97 mass% or more, and may be 99 mass% or more. The upper limit of the total amount of the polyamide resin and the magnetic material is 100 mass% or less of the entire resin composition.

Other Component

The resin composition of the present embodiment may consist only of the polyamide resin and the magnetic material, or may contain other components.

The resin composition of the present embodiment may contain other components without departing from the scope of the present embodiment. Examples of such additives include thermoplastic resins other than polyamide resins, elastomers, fillers, UV absorbers, antioxidants, hydrolysis resistance improvers, weathering stabilizers, matting agents, fluorescent brighteners, anti-dropping agents, antistatic agents, antifogging agents, anti-blocking agents, fluidity improvers, plasticizers, dispersants, antibacterial agents, and flame retardants. Only one type of these components may be used alone, or two or more types of these components may be used in combination.

For details of these other components, reference can be made to the descriptions in paragraphs [0130] to [0155] of JP 4894982 B, paragraph [0021] of JP 2010-281027 A, and paragraph

**[0049]** of JP 2016-223037 A, the contents of which are incorporated in the present specification. In addition, reference can be made to the description regarding thermoplastic resins in paragraph [0012] of JP 2001-123067 A, the descriptions regarding elastomers in paragraphs [0014] to [0015] of the same document, and the descriptions regarding elastomers in paragraphs [0016] to [0040] of JP 2004-285096 A, the contents of which are incorporated in the present specification.

The resin composition of the present embodiment is prepared so that a total of the polyamide resin, the magnetic material, and optionally blended other components is 100 mass%.

Method of Producing Resin Composition

The method for producing a resin composition according to the present embodiment is not particularly limited, but is preferably a method in which a single-screw or twin-screw extruder having a facility capable of devolatilizing from a vent port is used as a kneader. The polyamide resin, the magnetic material, and optionally blended other components may be collectively supplied to the kneader, or the polyamide resin component may be supplied and then the other components to be blended may be sequentially supplied. Further, two or more components selected from the components may be mixed and kneaded in advance.

Molded Article

The above-described resin composition (for example, pellets) is molded into a molded article by various molding methods. The molded article of the present embodiment is formed from the resin composition of the present embodiment.

The shape of the molded article is not particularly limited, and can be selected as appropriate depending on the application and purpose of the molded article. Examples of the molded article include film-shaped, rod-shaped, cylindrical, annular, circular, elliptical, polygonal, profile-shaped, hollow, frame-shaped, box-shaped, panel-shaped, and button-shaped molded articles. Among them, film-shaped, frame-shaped, panel-shaped, and button-shaped molded articles are preferable, and, for example, frame-shaped and panel-shaped molded articles have a thickness of from about 1 mm to 5 mm.

The method for forming the molded article is not particularly limited, and well-known molding methods can be adopted. Examples thereof include injection molding method, injection-compression molding method, extrusion molding method, profile extrusion method, transfer molding method, hollow molding method, gas-assisted hollow molding method, blow molding method, extrusion blow molding, IMC (in-mold coating molding) molding method, rotary molding method, multi-layer molding method, two-color molding method, insert molding method, sandwich molding method, foaming molding method, and pressure molding method. In particular, the resin composition of the present embodiment is suitable for a molded article obtained by an injection molding method, an injection compression molding method, or an extrusion molding method, and is further suitable for a molded article (extrusion molded article) obtained by an extrusion molding method. However, the resin composition of the present embodiment is not limited to molded articles obtained by these methods, of course.

Applications

The resin composition or molded article of the present embodiment is preferably used in a resin member required to have magnetic properties. For example, it is used in servo motors, stepping motors, buzzers, reed switches, electrical components, magnet bars, magnet rolls, HDD spindle motors, vibration motors for mobile phones, motors for video cameras, reel motors, magnetic seals, deflection yokes, generators, shutters, rotors, printer components, spindle motors, torque limiters, hall elements, oil cleaners, linear motors, rings, tachomakers, and the like.

Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

Raw Material

Polyamide Resin

MP 12: synthesized according to the following Synthesis Example.

Synthesis of MP12

A reaction vessel equipped with a stirrer, a partial condenser, a total condenser, a thermometer, a dropping funnel, a nitrogen input tube, and a strand die was charged with 11377 g (49.4 mol) of 1,12-dodecanedioic acid, and 11.66 g of sodium acetate/sodium hypophosphite monohydrate (molar ratio = 1/1.5), and then sufficiently purged with nitrogen, after which the contents were heated to 170°C and melted while stirring the system under a small stream of nitrogen gas.

6647 g of a mixed xylylenediamine (34.16 mol of metaxylylenediamine and 14.64 mol of paraxylylenediamine, available from Mitsubishi Gas Chemical Company, Inc.) in which the molar ratio of metaxylylenediamine and paraxylylenediamine was 70/30 was added dropwise to the melt within the reaction vessel with stirring, and the internal temperature was continuously increased to 235°C over a period of 2.5 hours while condensation water that was generated was discharged outside of the system. After dropwise addition was completed, the internal temperature was increased, and when the temperature reached 240°C, the pressure inside the reaction vessel was reduced. The internal temperature was then further increased, and the melt polycondensation reaction was continued for 10 minutes at 250°C. Next, the inside of the system was pressurized with nitrogen, and the obtained polymer was removed from the strand die and pelletized to obtain a polyamide resin (MP12).

The melt viscosity of the obtained MP12 was 146 Pa-s.

MXD6: polyamide resin synthesized from metaxylylenediamine and adipic acid, #6000, available from Mitsubishi Gas Chemical Company, Inc., melt viscosity of 150 Pa-s
PA6: polyamide 6, 1022B available from Ube Industries, Ltd., melt viscosity of 772 Pa·s

Melt Viscosity

The melt viscosity of the polyamide resin was measured under the following conditions: an apparent shear rate of 121.6 sec$^{-1}$, a measurement temperature of 260°C, a preheating time of 6 minutes, and a moisture content of the polyamide resin of 0.06 mass% or less. The values were expressed in units of Pa•s.
To be specific, measurement was performed using Capillograph D-1 available from Toyoseiki Seisaku-sho, Ltd. under the condition of a die: 1 mm $\varphi \times$ 10 mm in length.

Magnetic material

Strontium ferrite: strontium ferrite magnet, product number OP-71, available from DOWA Electronics Materials Co., Ltd.
Nd/Fe/B: neodymium magnet, product number MFP-12, available from Aichi Steel Corporation

Examples 1 to 4 and Comparative Example 1

Compound

The components were weighed and dry-blended so as to attain the compositions shown in Table 1 below (the components are expressed in mass%), then fed from the screw root of a twin-screw extruder (available from Shibaura Machine Co., Ltd., TEM26SS) using a twin-screw cassette weighing feeder (available from Kubota Corporation, CE-W-1-MP), and melt-kneaded to obtain a resin composition (pellets). The temperature of the extruder was set to 280°C.

Chemical Resistance Test

The pellets obtained above were injection-molded using an injection molding machine (SE130DU-HP available from Sumitomo Heavy Industries, Ltd.) under the conditions of a cylinder temperature of 270°C, a mold temperature of 30°C, and a molding cycle of 55 seconds to mold ISO multipurpose test pieces (thickness: 4 mm). The flexural modulus (unit: GPa) was measured in accordance with JIS K 7171.
The ISO multipurpose test pieces were immersed in an aqueous 10 mass% $CaCl_2$ solution at 23°C for 90 days, and then the flexural modulus (unit: GPa) was measured in accordance with JIS K 7171.
The ISO multipurpose test pieces were immersed in an aqueous 10 mass% $H_2SO_4$ solution at 23°C for 90 days, and then the flexural modulus (unit: GPa) was measured in accordance with JIS K 7171.
The flexural modulus retention was calculated from the following equation.

$$\texttt{Modulus retention (\%) = (A/B)} \times \texttt{100}$$

(A: flexural modulus (GPa) after immersion in an aqueous $CaCl_2$ solution or an aqueous $H_2SO_4$ solution, and B: flexural modulus (GPa) before immersion in an aqueous $CaCl_2$ solution or an aqueous $H_2SO_4$ solution)

Water Absorption Test

The ISO multipurpose test pieces obtained above were each immersed in pure water at 23°C for 120 days. The water absorption was calculated from the masses of the test piece before and after the immersion.

Water absorption (%) = [(mass of test piece after water immersion - mass of test piece before water immersion)/mass of test piece before water immersion] $\times$ 100

Magnetization Measurement

The magnetic properties of the resin composition were measured at an ordinary temperature using a direct current recording fluxmeter (TRF-5AH, available from Toei Industry Co., Ltd.). From the obtained B-H curve, the residual magnetic flux density Br (G), the coercive forces bHc (Oe) and iHc (Oe), and the maximum energy product BHmax (MGOe) were each determined.

[Table 1]

| | | Example 1 | Example 2 | Example 3 | Example 4 | Comparative Example 1 |
|---|---|---|---|---|---|---|
| Polyamide resin | Type | MP12 | MP12 | MXD6 | MXD6 | PA6 |
| | Added amount (mass%) | 53 | 53 | 53 | 53 | 53 |
| Magnetic material | Type | Strontium ferrite | Nd/Fe/B | Strontium ferrite | Nd/Fe/B | Strontium ferrite |
| | Added amount (mass%) | 47 | 47 | 47 | 47 | 47 |
| Chemical resistance test | Flexural modulus retention (%) after immersion in $CaCl_2$ | 98 | 98 | 96 | 95 | 56 |
| | Flexural modulus retention (%) after immersion in $H_2SO_4$ | 97 | 98 | 95 | 95 | 57 |
| Water absorption test | Water absorption (%) | 0.5 | 0.5 | 1.1 | 1.1 | 5.5 |
| Magnetization measurement | Br(G) | 3130 | 5550 | 2930 | 5380 | 2710 |
| | bHc(Oe) | 2410 | 4740 | 2210 | 4590 | 2050 |
| | iHc(Oe) | 2700 | 9150 | 2580 | 8920 | 2310 |
| | BHmax (MGOe) | 2.2 | 6.0 | 2.0 | 5.9 | 2.1 |

As is clear from the results described above, the resin composition of the present invention had high magnetization performance. Further, the magnetization performance could be exhibited without the excellent performance inherent in the xylylenediamine-based polyamide resin being inhibited. In particular, the use of MP12 as the xylylenediamine-based polyamide resin could achieve a remarkably high magnetization performance.

**Claims**

1. A resin composition for a bonded magnet, the resin composition comprising:

   from 10 to 90 parts by mass of a polyamide resin and from 90 to 10 parts by mass of a magnetic material, wherein
   the polyamide resin comprises a xylylenediamine-based polyamide resin,
   the xylylenediamine-based polyamide resin contains diamine-derived structural units and dicarboxylic acid-derived structural units,
   70 mol% or more of the diamine-derived structural units are derived from a xylylenediamine, and
   70 mol% or more of the dicarboxylic acid-derived structural units are derived from an $\alpha,\omega$-linear aliphatic dicarboxylic acid having from 4 to 12 carbon atoms.

2. The resin composition according to claim 1, wherein the xylylenediamine comprises from 10 to 90 mol% of metaxylylenediamine and from 90 to 10 mol% of paraxylylenediamine.

3. The resin composition according to claim 1 or 2, wherein the $\alpha,\omega$-linear aliphatic dicarboxylic acid having from 4 to 12 carbon atoms comprises dodecanedioic acid.

4. The resin composition according to claim 1, wherein

the xylylenediamine comprises from 10 to 90 mol% of metaxylylenediamine and from 90 to 10 mol% of parax-ylylenediamine, and
the $\alpha,\omega$-linear aliphatic dicarboxylic acid having from 4 to 12 carbon atoms comprises dodecanedioic acid.

5. The resin composition according to claim 1, wherein

70 mol% or more of the diamine-derived structural units are derived from metaxylylenediamine, and
70 mol% or more of the dicarboxylic acid-derived structural units are derived from adipic acid.

6. The resin composition according to any one of claims 1 to 5, wherein the xylylenediamine-based polyamide resin has a melt viscosity of from 10 to 600 Pa·s as measured at 121.6 sec$^{-1}$ and a measurement temperature of 260°C.

7. The resin composition according to any one of claims 1 to 6, wherein the magnetic material comprises a ferrite magnet and/or a rare earth magnet.

8. The resin composition according to any one of claims 1 to 7, wherein

the xylylenediamine-based polyamide resin has a melt viscosity of from 10 to 600 Pa-s as measured at 121.6 sec$^{-1}$ and a measurement temperature of 260°C, and
the magnetic material comprises a ferrite magnet and/or a rare earth magnet.

9. A molded article formed from the resin composition described in any one of claims 1 to 8.

## INTERNATIONAL SEARCH REPORT

| International application No. |
|---|
| **PCT/JP2022/023902** |

**A.    CLASSIFICATION OF SUBJECT MATTER**

***C08L 77/06***(2006.01)i; ***C08G 69/26***(2006.01)i; ***C08K 3/08***(2006.01)i; ***H01F 1/053***(2006.01)i; ***H01F 1/113***(2006.01)i
FI:    C08L77/06; C08K3/08; C08G69/26; H01F1/053 130; H01F1/113

According to International Patent Classification (IPC) or to both national classification and IPC

**B.    FIELDS SEARCHED**

Minimum documentation searched (classification system followed by classification symbols)

C08L77/06; C08G69/26; C08K3/08; H01F1/053; H01F1/113

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 63-128071 A (MITSUBISHI GAS CHEMICAL CO., INC.) 31 May 1988 (1988-05-31)<br>claims, p. 2, upper left column, lines 10-13, p. 2, upper right column, line 10 to lower left column, line 6, p. 3, upper right column, lines 12-19, examples | 1-9 |
| X | JP 63-128072 A (MITSUBISHI GAS CHEMICAL CO., INC.) 31 May 1988 (1988-05-31)<br>claims, p. 2, upper left column, lines 10-13, p. 2, upper right column, line 9 to lower left column, line 5, p. 3, upper right column, lines 5-15, examples | 1-9 |
| X | JP 53-074559 A (MITSUBISHI GAS CHEMICAL CO., INC.) 03 July 1978 (1978-07-03)<br>claims, p. 1, left column, lines 13-20, p. 2, lower right column, line 13 to p. 3, upper left column, line 13, p. 4, lower right column, line 4 to p. 5, upper left column, line 7, examples | 1-9 |
| X | JP 58-125803 A (SUWA SEIKOSHA K.K.) 27 July 1983 (1983-07-27)<br>claims 1-4, examples | 1, 5-9 |
| A |  | 2-4 |
| A | JP 2007-003223 A (NSK LTD.) 11 January 2007 (2007-01-11)<br>claims 1-8, examples | 1-9 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/023902**

**C.    DOCUMENTS CONSIDERED TO BE RELEVANT**

| Category* | Citation of document, with indication, where appropriate, of the relevant passages | Relevant to claim No. |
|---|---|---|
| A | JP 2014-101494 A (UNITIKA LTD.) 05 June 2014 (2014-06-05) claims 1-6, examples | 1-9 |
| A | WO 2020/250564 A1 (MITSUBISHI GAS CHEMICAL CO., INC.) 17 December 2020 (2020-12-17) claims 1-9, examples | 1-9 |

Form PCT/ISA/210 (second sheet) (January 2015)

**INTERNATIONAL SEARCH REPORT**
Information on patent family members

International application No.

**PCT/JP2022/023902**

| Patent document cited in search report | | | Publication date (day/month/year) | Patent family member(s) | | | Publication date (day/month/year) |
|---|---|---|---|---|---|---|---|
| JP | 63-128071 | A | 31 May 1988 | (Family: none) | | | |
| JP | 63-128072 | A | 31 May 1988 | (Family: none) | | | |
| JP | 53-074559 | A | 03 July 1978 | (Family: none) | | | |
| JP | 58-125803 | A | 27 July 1983 | (Family: none) | | | |
| JP | 2007-003223 | A | 11 January 2007 | US claims 1-7, examples WO EP CN | 2008/0199118 2006/121052 1881300 101175974 | A1 A1 A1 A | |
| JP | 2014-101494 | A | 05 June 2014 | CN claims 1-6, examples TW | 103772976 201430053 | A A | |
| WO | 2020/250564 | A1 | 17 December 2020 | EP claims 1-9, examples CN KR TW | 3985150 113906172 10-2022-0020285 202112899 | A1 A A A | |

Form PCT/ISA/210 (patent family annex) (January 2015)

**EP 4 400 548 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001123067 A
- JP 2005072564 A
- JP 4894982 B
- JP 2010281027 A
- JP 2016223037 A
- JP 2004285096 A